# EUROPEAN PATENT APPLICATION

(11) **EP 3 617 744 A1**
(43) Date of publication of application: **04.03.2020**
(21) Application number: 17909903.1
(22) Date of filing: 16.05.2017
(51) Int. Cl.: G01S 7/521, B60R 19/48, G01S 15/93, H04R 1/20

(54) **ULTRASONIC SENSOR DEVICE AND OBSTACLE DETECTION DEVICE**

(71) Applicant: Mitsubishi Electric Corporation, Chiyoda-ku Tokyo 100-8310 (JP)
(72) Inventor: IBATA, Koji, Tokyo 100-8310 (JP); HARA, Rokuzo, Tokyo 100-8310 (JP); KIMURA, Tomonori, Tokyo 100-8310 (JP); NISHIOKA, Yasuhiro, Tokyo 100-8310 (JP); INOUE, Satoru, Tokyo 100-8310 (JP)
(74) Representative: Pfenning, Meinig & Partner mbB
(86) International application number: PCT/JP2017/018349
(87) International publication number: WO 2018/211589

(57) **Abstract**

An attachment member (1) has a through hole (11). An ultrasonic sensor (2) is fixed to the attachment member (1) in such a manner that an emitting surface (22) of the ultrasonic sensor (2) is exposed from the through hole (11) of the attachment member (1). A vibration propagation preventing layer (3) is interposed between the entire periphery of a side surface of the ultrasonic sensor (2) and a wall surface of the through hole (11) of the attachment member (1). Vibration plates (41) and (42) are disposed on one of a first straight line passing through the center point of the emitting surface (22) of the ultrasonic sensor (2) on a horizontal plane parallel to the emitting surface (22) and a second straight line perpendicular to the first straight line, and connect the emitting surface (22) of the ultrasonic sensor (2) to the attachment member (1).

## Description

### TECHNICAL FIELD

The present invention relates to an ultrasonic sensor device and an obstacle detection device each including an ultrasonic sensor, and particularly to an ultrasonic sensor and an obstacle detection device each having a wide directivity characteristic in one direction and a narrow directivity characteristic in another direction perpendicular to the one direction.

### BACKGROUND ART

An ultrasonic sensor using a piezoelectric element is known as an ultrasonic sensor. The ultrasonic sensor is used for an obstacle detection device for detecting an obstacle by transmitting an ultrasonic wave into air and receiving an ultrasonic wave reflected by the obstacle or the like.

For example, the ultrasonic sensor is mounted in a vehicle such as an automobile. That is, the ultrasonic sensor is embedded in a bumper or the like of the vehicle, and used as an obstacle detection device for detecting an obstacle around the vehicle.

In such an obstacle detection device, it is necessary to reliably detect an obstacle around the vehicle that interferes with movement of the vehicle, and not to detect a road surface or the like that does not interfere with movement of the vehicle. For this purpose, the ultrasonic sensor desirably has a wide directivity characteristic in the horizontal direction and a narrow directivity characteristic in the vertical direction.

For this reason, Patent Literature 1 proposes an ultrasonic sensor device used for an obstacle detection device mounted on a vehicle and having a directivity characteristic in the horizontal direction different from that in the vertical direction.

The ultrasonic sensor device disclosed in Patent Literature 1 is an ultrasonic transducer in which a unimorph vibrator is constituted by bonding a piezoelectric element to an inside of a bottom of a bottomed cylindrical case having a dug portion that is relatively long in one direction and relatively short in another direction. Transmission and reception of ultrasonic waves are performed on an outer surface of the bottomed cylindrical case. On the relatively short side surface of the bottomed cylindrical case, an opening not exceeding this width is formed, and directivity is narrowed.

### CITATION LIST

### PATENT LITERATURES

Patent Literature 1: JP 2006-345271 A

### SUMMARY OF INVENTION

### TECHNICAL PROBLEM

In the ultrasonic sensor device disclosed in Patent Literature 1, the bottomed cylindrical case is formed of a metal and made of an aluminum material or the like. In general, a dug portion and an opening are formed in the bottomed cylindrical case by forging, cutting, or the like.

However, in order to control a directivity characteristic, the dimensional accuracy of the dug portion and the opening is important, and special processing is required disadvantageously.

The present invention has been achieved in view of the above point, and an object of the present invention is to obtain an ultrasonic sensor device and an obstacle detection device not requiring special processing and having a directivity characteristic in one direction narrower than that in another direction perpendicular to the one direction.

### SOLUTION TO PROBLEM

An ultrasonic sensor device according to the present invention includes an ultrasonic sensor fixed to an attachment member having a through hole via a vibration propagation preventing layer between the entire periphery of a side surface and a wall surface of the through hole of the attachment member in such a manner that an emitting surface is exposed from the through hole of the attachment member, in which a vibration plate connecting the emitting surface of the ultrasonic sensor to the attachment member is disposed on one of a first straight line passing through the center point of the emitting surface of the ultrasonic sensor on a horizontal plane parallel to the emitting surface and a second straight line perpendicular to the first straight line.

### ADVANTAGEOUS EFFECTS OF INVENTION

According to the present invention, an ultrasonic sensor device having two directivity characteristics in directions perpendicular to each other can be obtained without being machined in a special manner, one of the directivity characteristics being narrower than the other of the directivity characteristics.

### BRIEF DESCRIPTION OF DRAWINGS

FIG. 1 is a plan view schematically illustrating a configuration of an ultrasonic sensor device and an obstacle detection device according to a first embodiment of the present invention.
FIG. 2 is a cross-sectional view taken along line II-II illustrated in FIG. 1.
FIG. 3 is a characteristic diagram illustrating a vibration displacement on each of lines I-I and II-II illustrated in FIG. 1.
FIG. 4 is a characteristic diagram illustrating a normalized emission sound pressure in the first embodiment.
FIG. 5 is a plan view schematically illustrating a configuration of an ultrasonic sensor device and an obstacle detection device according to a second embodiment of the present invention.
FIG. 6 is a plan view schematically illustrating a configuration of an ultrasonic sensor device and an obstacle detection device according to a third embodiment of the present invention.
FIG. 7 is a cross-sectional view taken along line II-II illustrated in FIG. 6.
FIG. 8 is a cross-sectional view schematically illustrating a configuration of an ultrasonic sensor device and an obstacle detection device according to a fourth embodiment of the present invention.
FIG. 9 is a cross-sectional view schematically illustrating a configuration of an ultrasonic sensor device and an obstacle detection device according to a fifth embodiment of the present invention.

### DESCRIPTION OF EMBODIMENTS

### First Embodiment.

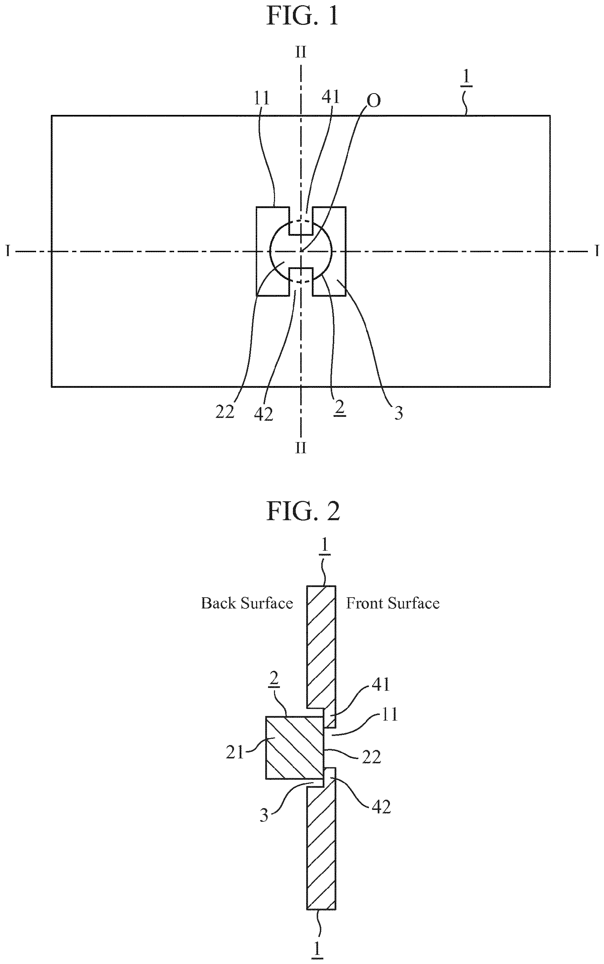

An ultrasonic sensor device and an obstacle detection device according to a first embodiment of the present invention will be described on the basis of FIGS. 1 and 2.

The ultrasonic sensor device includes an attachment member 1, an ultrasonic sensor 2, a vibration propagation preventing layer 3, and vibration plates 41 and 42. When the ultrasonic sensor device is mounted on a vehicle such as an automobile, that is, embedded and installed in a bumper or the like of a vehicle and used, the ultrasonic sensor device functions as an obstacle detection device for detecting an obstacle around the vehicle.

Even when functioning as an obstacle detection device, basically, the ultrasonic sensor device is used as a sensor for detecting an obstacle around the vehicle. Therefore, hereinafter, the ultrasonic sensor device will be mainly described.

The attachment member 1 is formed with a through hole 11 having a rectangular planar shape. The attachment member 1 is molded with resin. The planar shape of the through hole 11 is a square. In a case of use as an obstacle detection device for detecting an obstacle around a vehicle, the attachment member 1 is constituted by a member different from a member constituting a bumper of the vehicle in order to be attached to the bumper. A part of the bumper of the vehicle may be the attachment member 1, and the through hole 11 may be formed in a part of the bumper.

The ultrasonic sensor 2 uses a piezoelectric element. The ultrasonic sensor 2 is cylindrical with an emitting surface 22 for emitting an ultrasonic wave on a surface thereof. The ultrasonic sensor 2 includes a cylindrical main body case 21 having the emitting surface 22 for emitting an ultrasonic wave on a surface thereof, and a piezoelectric element incorporated in the main body case 21. The ultrasonic sensor 2 does not have anisotropic directivity characteristic, that is, ultrasonic waves to be emitted from the emitting surface 22 are isotropic in all radial directions of the emitting surface 22. When an electric signal is applied to the ultrasonic sensor 2 from a transmission circuit (not illustrated), the emitting surface 22 of the ultrasonic sensor 2 vibrates in response to the applied electric signal, and an ultrasonic wave is emitted. The electric signal applied from the transmission circuit is a pulse burst electric signal. When there is an obstacle in an ultrasonic wave emission direction, an emitted ultrasonic wave is reflected by the obstacle, and a part of the ultrasonic wave returns to the same ultrasonic sensor 2. The obstacle is detected by receiving the ultrasonic wave reflected by the obstacle.

Note that it has been described that the obstacle detection device for detecting an obstacle around a vehicle is assumed and the obstacle detection device detects an obstacle. However, the obstacle detection device may be used for detecting not an obstacle but an object.

The ultrasonic sensor 2 is fixed to the attachment member 1 via the vibration propagation preventing layer 3 between the entire periphery of a side surface of the cylindrical main body case 21 and a wall surface of the through hole 11 of the attachment member 1 in such a manner that the emitting surface 22 of the ultrasonic sensor 2 is exposed from the through hole 11 of the attachment member 1.

In the first embodiment, an end of the ultrasonic sensor 2 on a front surface side thereof is inserted into the through hole 11 of the attachment member 1 from a back surface of the attachment member 1 and fixed to the attachment member 1 by a fixing structure (not illustrated). An insertion portion of the attachment member 1 in the through hole 11 in the ultrasonic sensor 2 is an end on a front surface side including the emitting surface 22 as illustrated in FIG. 2. A fixing position of the ultrasonic sensor 2 with respect to the attachment member 1 is a position where the center point "O" of the emitting surface 22 of the ultrasonic sensor 2 is flush with the center point of the attachment member 1 in the through hole 11.

The vibration propagation preventing layer 3 is a gap formed between the entire periphery of the side surface of the cylindrical ultrasonic sensor 2 and the wall surface of the through hole 11 of the attachment member 1.

The vibration plates 41 and 42 are disposed on the second straight line, line II-II as illustrated, passing through the center point "O" of the emitting surface 22 of the ultrasonic sensor 2 on a horizontal plane parallel to the emitting surface. This second straight line is a straight line indicating the vertical direction and a line perpendicular to a lower side of the attachment member 1 in a case of use as an obstacle detection device for detecting an obstacle around a vehicle . In the first embodiment, the vibration plates 41 and 42 are disposed on the second straight line, but may be disposed on the first straight line perpendicular to the second straight line, line I-I as illustrated, depending on use. In any case, the vibration plates 41 and 42 are disposed on one of the second straight line II-II and the first straight line I-I, and are not disposed on the other straight line. That is, only a gap as the vibration propagation preventing layer 3 is interposed between the side surface of the ultrasonic sensor 2 and the wall surface of the through hole 11 of the attachment member 1 on the first straight line I-I.

The vibration plate 41 is located on an upper side in FIG. 1, and is formed so as to extend linearly from the attachment member 1 toward the center point of the through hole 11 on the second straight line II-II. That is, the vibration plate 41 is integrally molded with the attachment member 1 made of resin. A surface of the vibration plate 41 is formed so as to be flush with a surface of the attachment member 1, and the vibration plate 41 has a thickness of less than half of the thickness of the attachment member 1. The vibration plate 41 has a length with which a tip thereof is in contact with an edge of the emitting surface 22 of the ultrasonic sensor 2. The tip of the vibration plate 41 is connected to the edge of the emitting surface 22 of the ultrasonic sensor 2. As a result, vibration of the emitting surface 22 of the ultrasonic sensor 2 propagates to the vibration plate 41 and further propagates to the attachment member 1.

The vibration plate 42 is located on a lower side in FIG. 1, and faces the vibration plate 41 to form a pair therewith. The vibration plate 42 is formed so as to extend linearly from the attachment member 1 toward the center point of the through hole 11 on the second straight line II-II. That is, the vibration plate 41 is integrally molded with the attachment member 1 made of resin. A surface of the vibration plate 42 is formed so as to be flush with a surface of the attachment member 1, and the vibration plate 42 has a thickness of less than half of the thickness of the attachment member 1. The vibration plate 42 has a length with which a tip thereof is in contact with an edge of the emitting surface 22 of the ultrasonic sensor 2. The tip of the vibration plate 41 is connected to the edge of the emitting surface 22 of the ultrasonic sensor 2. As a result, vibration of the emitting surface 22 of the ultrasonic sensor 2 propagates to the vibration plate 41 and further propagates to the attachment member 1.

Next, operation of the ultrasonic sensor device according to the first embodiment will be described.

When an electric signal is applied to the ultrasonic sensor 2 from a transmission circuit, the emitting surface 22 of the ultrasonic sensor 2 vibrates, air vibrates by the vibration, and an ultrasonic wave is emitted. Since the emitting surface 22 of the ultrasonic sensor 2 communicates with the attachment member 1 via the vibration plates 41 and 42, vibration of the emitting surface 22 of the ultrasonic sensor 2 propagates to the vibration plates 41 and 42, and further propagates to the attachment member 1.

As a result, the ultrasonic wave is emitted from the emitting surface 22 of the ultrasonic sensor 2, the vibration plates 41 and 42, and the attachment member 1.

Therefore, in a second direction along the second straight line II-II on which the vibration plates 41 and 42 are disposed, vibration of the emitting surface 22 of the ultrasonic sensor 2 propagates to the attachment member 1 via the vibration plates 41 and 42. Therefore, ultrasonic waves are generated by the vibration of the emitting surface 22 of the ultrasonic sensor 2, the vibration of the vibration plates 41 and 42, and the vibration of the attachment member 1, synthesized, and emitted.

Meanwhile, in a first direction along the first straight line I-I on which no vibration plate is present, ultrasonic waves are emitted by the vibration of the emitting surface 22 of the ultrasonic sensor 2 and the vibration of the attachment member 1. However, an ultrasonic wave in which the vibration of the ultrasonic sensor 2 is dominant is emitted.

That is, in the first direction in which the vibration plate 41 is not present, the vibration of the emitting surface 22 of the ultrasonic sensor 2 is less likely to propagates to the attachment member 1 than in the second direction in which the vibration plates 41 and 42 are disposed. Therefore, a distribution of the vibration in the attachment member 1 is different between the second direction and the first direction.

In short, since the vibration serving as an excitation source of an ultrasonic wave is different between the second direction and the first direction, the ultrasonic sensor device according to the first embodiment emits ultrasonic waves having different directivity characteristics between the second direction and the first direction.

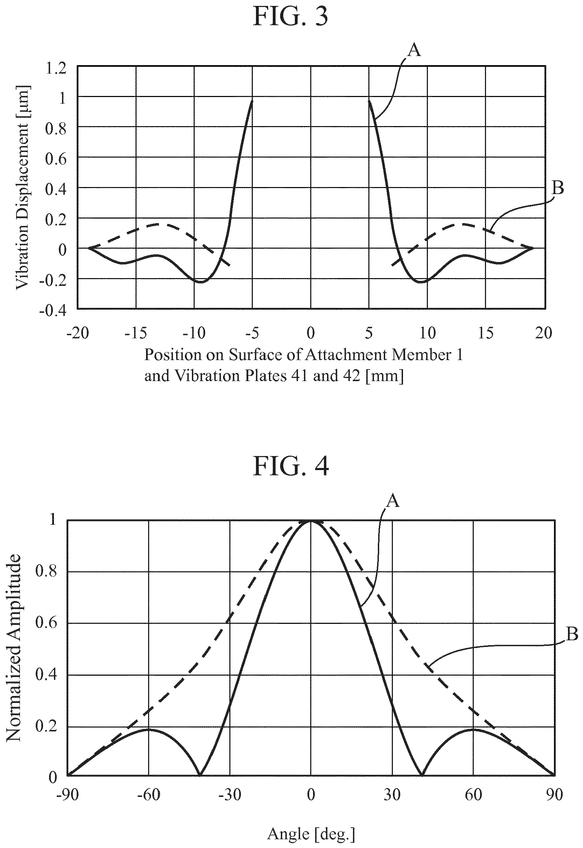

FIG. 3 illustrates a vibration displacement on each of the second straight line II-II and the first straight line I-I at this time. In FIG. 3, the horizontal axis represents a position [mm] on a surface of the attachment member 1 and the vibration plates 41 and 42, the vertical axis represents a vibration displacement [µm], the curve A indicated by the solid line represents a calculation result of a vibration displacement on the second straight line II-II on the surface of the attachment member 1 and the vibration plates 41 and 42 when the ultrasonic sensor 2 is driven, and the curve B indicated by the broken line represents a calculation result of a vibration displacement on the first straight line I-I on the surface of the attachment member 1 when the ultrasonic sensor 2 is driven. An origin 0 indicated on the horizontal axis indicates the position of the center point "O" on the emitting surface 22 of the ultrasonic sensor 2. Note that a vibration displacement on the emitting surface 22 of the ultrasonic sensor 2 is not illustrated.

As understood from FIG. 3, vibration of the emitting surface 22 generated by driving the ultrasonic sensor 2 propagates to the attachment member 1 via the vibration plates 41 and 42, and therefore the attachment member 1 also vibrates. However, a distribution of the vibration displacement on the second straight line II-II is different from that on the first straight line I-I. The vibration on the emitting surface 22 of the ultrasonic sensor 2 propagates to the attachment member 1 via the vibration plates 41 and 42. Therefore, a propagation method is different between the second direction in which the vibration plates 41 and 42 are present and the first direction in which no vibration plate is present. As a result, a state of distribution of the vibration displacement is also different therebetween.

Next, the directivity characteristic of the ultrasonic sensor device according to the first embodiment will be described with reference to FIG. 4. In FIG. 4, the horizontal axis represents an angle [deg] at which an ultrasonic wave is emitted on the basis of the ultrasonic sensor 2, the vertical axis represents a normalized emission sound pressure normalized by a maximum value, the curve A indicated by the solid line represents a directivity characteristic determined by calculation in the second direction, and the curve B indicated by the broken line represents a directivity characteristic determined by calculation in the first direction.

As understood from FIG. 4, the directivity characteristic in the second direction represented by the curve A is different from the directivity characteristic in the first direction represented by the curve B. In the second direction, vibration occurs in a wide range of the emitting surface 22 of the ultrasonic sensor 2, the vibration plates 41 and 42, and the attachment member 1, and therefore the directivity characteristic is narrowed. Meanwhile, in the first direction, the vibration of the emitting surface 22 of the ultrasonic sensor 2 is dominant, and a vibration range is narrow. Therefore, the directivity characteristic is wide.

In short, the ultrasonic sensor device according to the first embodiment uses the ultrasonic sensor 2 in which the directivity characteristic in the first direction is the same as that in the second direction, and obtains the directivity characteristic in the second direction narrower than that in the first direction. That is, the first direction indicates a wide directivity characteristic, and the second direction indicates a narrow directivity characteristic.

Next, a case where the ultrasonic sensor device having such a configuration is used as an obstacle detection device for detecting an obstacle around a vehicle will be described. In this case, the ultrasonic sensor device is embedded and installed in a bumper or the like of the vehicle in such a manner that the second direction is the vertical direction and the first direction is the horizontal direction.

As a result, the obstacle detection device becomes a detection system exhibiting a wide directivity characteristic in the horizontal direction and a narrow directivity characteristic in the vertical direction.

Therefore, the obstacle detection device has a wide directivity characteristic in the horizontal direction, and therefore can reliably detect an obstacle around the vehicle, interfering with movement of the vehicle. In addition, the obstacle detection device has a narrow directivity characteristic in the vertical direction, and therefore does not detect a road surface or the like not interfering with movement.

In short, the front sensitivity is good, a long distance can be detected, and false detection due to the ground or the like when a long distance is detected can be prevented. It is possible to achieve stable obstacle detection from a long distance to a short distance with high reliability without malfunction.

As described above, the ultrasonic sensor device according to the first embodiment includes the ultrasonic sensor fixed to the attachment member having the through hole via the vibration propagation preventing layer between the entire periphery of a side surface and a wall surface of the through hole of the attachment member in such a manner that the emitting surface is exposed from the through hole of the attachment member, in which the vibration plate connecting the emitting surface of the ultrasonic sensor to the attachment member is disposed on one of the first straight line passing through the center point of the emitting surface of the ultrasonic sensor on a horizontal plane parallel to the emitting surface and the second straight line perpendicular to the first straight line. Therefore, a directivity characteristic in one direction in which the vibration plate is disposed can be narrower than that in the other direction in which no vibration plate is disposed.

In addition, the vibration plates 41 and 42 are connected to the emitting surface 22 of the ultrasonic sensor 2, and therefore the ultrasonic sensor 2 can be prevented from jumping out of the surface of the attachment member 1.

Furthermore, by a simple method without such special processing that the ultrasonic sensor 2 is inserted into the through hole 11 from a back surface side of the attachment member 1 in such a manner that the center point "O" on the emitting surface 22 of the ultrasonic sensor 2 is flush with the center point in the through hole 11 of the attachment member 1, and the ultrasonic sensor 2 is fixed to the attachment member 1, a wide directivity characteristic in the first direction and a narrow directivity characteristic in the second direction can be obtained with high accuracy.

In addition, the obstacle detection device according to the first embodiment exhibits a wide directivity characteristic in the horizontal direction and a narrow directivity characteristic in the vertical direction, and therefore can reliably detect an obstacle around a vehicle, interfering with movement of the vehicle, and does not detect a road surface or the like not interfering with movement. It is possible to achieve stable obstacle detection from a long distance to a short distance with high reliability without malfunction.

### Second Embodiment.

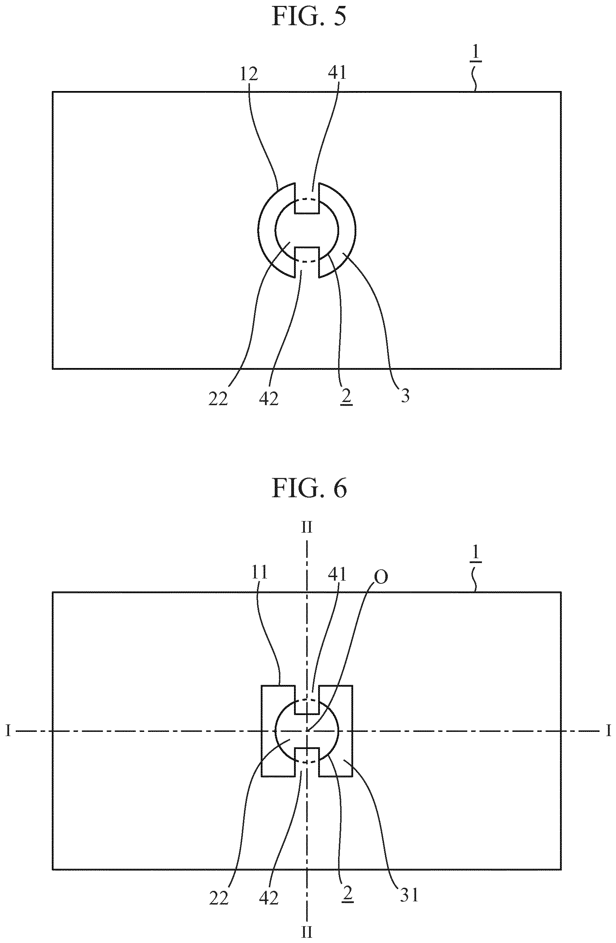

An ultrasonic sensor device and an obstacle detection device according to a second embodiment of the present invention will be described on the basis of FIG. 5.

The second embodiment is different from the first embodiment in that the shape of the through hole 11 of the attachment member 1 is a rectangle in the first embodiment, whereas the shape of a through hole 12 of an attachment member 1 is a circle in the second embodiment. The other points are the same.

Even in the second embodiment having such a configuration, similar effects to those of the first embodiment can be obtained.

Note that in FIG. 5, the same reference numerals as in FIGS. 1 and 2 denote the same or corresponding portions.

The shape of the through hole 12 of the attachment member 1 is not limited to a circle, and may be a polygon such as an octagon. Note that a point-symmetrical shape is preferable among polygons.

### Third Embodiment.

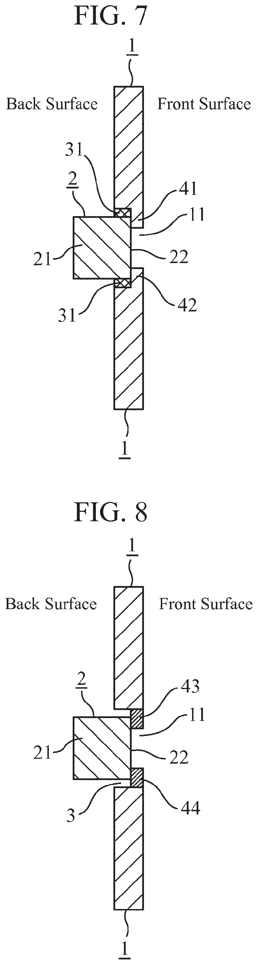

An ultrasonic sensor device and an obstacle detection device according to a third embodiment of the present invention will be described on the basis of FIGS. 6 and 7.

The third embodiment is different from the first embodiment in that a gap formed between the side surface of the ultrasonic sensor 2 and the wall surface of the through hole 11 of the attachment member 1 is used as the vibration propagation preventing layer 3 in the first embodiment, whereas a member made of a material that is less likely to propagate an ultrasonic wave than vibration plates 41 and 42 is inserted into this gap and used as a vibration propagation preventing layer 31 in the third embodiment. The other points are the same.

Note that in FIGS. 6 and 7, the same reference numerals as in FIGS. 1 and 2 denote the same or corresponding portions.

The vibration propagation preventing layer 31 may be made of any material as long as being less likely to propagate an ultrasonic wave than the vibration plates 41 and 42, and may be made of a resin different from an attachment member 1. That is, the vibration of an emitting surface of an ultrasonic sensor 2 only needs to be prevented from propagating to the attachment member 1 from a portion other than the vibration plates 41 and 42. The vibration propagation preventing layer 31 may be made of any material as long as being less likely to propagate an ultrasonic wave than the vibration plates 41 and 42.

Even in the third embodiment having such a configuration, similar effects to those of the first embodiment can be obtained.

Furthermore, the vibration propagation preventing layer 31 is in close contact with a space between the side surface of the ultrasonic sensor 2 and the wall surface of a through hole 11 of the attachment member 1. As a result, the ultrasonic sensor 2 can be fixed to the attachment member 1 by the vibration propagation preventing layer 3, and any other fixing structure is not required.

### Fourth Embodiment.

An ultrasonic sensor device and an obstacle detection device according to a fourth embodiment of the present invention will be described on the basis of FIG. 8.

The fourth embodiment is different from the first embodiment in that the vibration plates 41 and 42 are formed integrally with the attachment member 1 in the first embodiment, whereas vibration plates 43 and 44 are formed of a member different from an attachment member 1 in the fourth embodiment. The other points are the same.

Note that in FIG. 8, the same reference numerals as in FIGS. 1 and 2 denote the same or corresponding portions.

Surfaces of the vibration plates 43 and 44 are formed so as to be flush with a surface of the attachment member 1, and the vibration plates 43 and 44 are bonded to the attachment member 1 at one end surface of each of the vibration plates 43 and 44. The vibration plates 43 and 44 each have a thickness of less than half of the thickness of the attachment member 1. A tip located on the other end surface side is connected to an edge of an emitting surface 22 of an ultrasonic sensor 2. As a result, vibration of the emitting surface 22 of the ultrasonic sensor 2 propagates to the vibration plates 43 and 44 and further propagates to the attachment member 1. A material of the vibration plates 43 and 44 may be any material as long as propagating an ultrasonic wave, and may be a metal or a resin different from the attachment member 1.

Even in the fourth embodiment having such a configuration, similar effects to those of the first embodiment can be obtained.

### Fifth Embodiment.

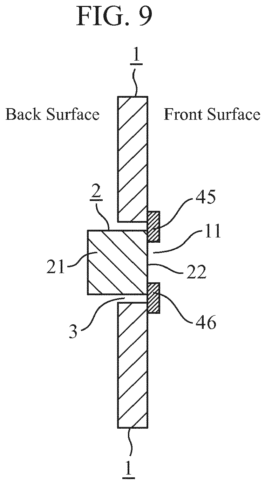

An ultrasonic sensor device and an obstacle detection device according to a fifth embodiment of the present invention will be described on the basis of FIG. 9.

The fifth embodiment is different from the fourth embodiment in that the vibration plates 43 and 44 are formed so as to be flush with a surface of the attachment member 1 and the vibration plates 43 and 44 are bonded to the attachment member 1 at one end surface of each of the vibration plates 43 and 44 in the fourth embodiment, whereas vibration plates 45 and 46 are bonded to a surface of an attachment member 1 at a back surface of a back end of each of the vibration plates 45 and 46 in the fifth embodiment The other points are the same.

Note that in FIG. 9, the same reference numerals as in FIGS. 1 and 2 denote the same or corresponding portions.

The vibration plates 45 and 46 each have a thickness of less than half of the thickness of the attachment member 1. Back surfaces of tips of the vibration plates 45 and 46 are connected to an edge of an emitting surface 22 of an ultrasonic sensor 2. As a result, vibration of the emitting surface 22 of the ultrasonic sensor 2 propagates to the vibration plates 45 and 46 and further propagates to the attachment member 1. A material of the vibration plates 45 and 46 may be any material as long as propagating an ultrasonic wave, and may be the same resin as the attachment member 1, a metal, or a resin different from the attachment member 1.

Even in the fifth embodiment having such a configuration, similar effects to those of the first embodiment can be obtained.

Note that the present invention can freely combine the embodiments to each other, modify any constituent element in each of the embodiments, or omit any constituent element in each of the embodiments within the scope of the invention.

### REFERENCE SIGNS LIST

- 1:: Attachment member,
- 11 and 12:: Through hole,
- 2:: Ultrasonic sensor,
- 21:: Main body case,
- 22:: Emitting surface,
- 3 and 31:: Vibration propagation preventing layer,
- 41 to 46:: Vibration plate.

## Claims

1. An ultrasonic sensor device comprising:
an attachment member having a through hole;
an ultrasonic sensor having a side surface and an emitting surface for emitting an ultrasonic wave, and fixed to the attachment member via a vibration propagation preventing layer between an entire periphery of the side surface and a wall surface of the through hole of the attachment member in such a manner that the emitting surface is exposed from the through hole of the attachment member; and
a vibration plate disposed on one of a first straight line passing through a center point of the emitting surface of the ultrasonic sensor on a horizontal plane parallel to the emitting surface and a second straight line perpendicular to the first straight line, and connecting the emitting surface of the ultrasonic sensor to the attachment member.

2. The ultrasonic sensor device according to claim 1, wherein the ultrasonic sensor is cylindrical with the emitting surface on a surface thereof.

3. The ultrasonic sensor device according to claim 1, wherein an end of the ultrasonic sensor on a front surface side thereof is inserted into the through hole of the attachment member.

4. The ultrasonic sensor device according to claim 1, wherein the through hole of the attachment member has a rectangular planar shape.

5. The ultrasonic sensor device according to claim 1, wherein the through hole of the attachment member has a circular planar shape.

6. The ultrasonic sensor device according to claim 1, wherein the vibration propagation preventing layer is a gap formed between a side surface of the ultrasonic sensor and a wall surface of the through hole of the attachment member.

7. The ultrasonic sensor device according to claim 1, wherein the vibration propagation preventing layer is made of a resin material that is inserted between the side surface of the ultrasonic sensor and the wall surface of the through hole of the attachment member, and less likely to propagate an ultrasonic wave than the vibration plate.

8. The ultrasonic sensor device according to claim 1, wherein the vibration plate is integrally formed with the attachment member.

9. An obstacle detection device comprising:
an attachment member having a through hole;
an ultrasonic sensor using a piezoelectric element, having a side surface and an emitting surface for emitting an ultrasonic wave, and fixed to the attachment member via a vibration propagation preventing layer between an entire periphery of the side surface and a wall surface of the through hole of the attachment member in such a manner that the emitting surface is exposed from the through hole of the attachment member; and
a vibration plate disposed on one of a first straight line passing through a center point of the emitting surface of the ultrasonic sensor on a horizontal plane parallel to the emitting surface and a second straight line perpendicular to the first straight line, and connecting the emitting surface of the ultrasonic sensor to the attachment member.

10. The obstacle detection device according to claim 9, wherein the ultrasonic sensor is cylindrical with the emitting surface on a surface thereof.

11. The obstacle detection device according to claim 9, wherein an end of the ultrasonic sensor on a front surface side thereof is inserted into the through hole of the attachment member.

12. The obstacle detection device according to claim 9, wherein the vibration propagation preventing layer is a gap formed between the side surface of the ultrasonic sensor and the wall surface of the through hole of the attachment member.

13. The obstacle detection device according to claim 9, wherein the vibration propagation preventing layer is made of a resin material inserted between the side surface of the ultrasonic sensor and the wall surface of the through hole of the attachment member.
